# EUROPÄISCHE PATENTSCHRIFT

(11) **EP 1 871 671 B1**
(45) Veröffentlichungstag und Bekanntmachung des Hinweises auf die Patenterteilung: **18.02.2009**
(21) Anmeldenummer: 06724036.6
(22) Anmeldetag: 05.04.2006
(51) Int. Cl.: B65B 35/20, B65B 35/24

(54) **ÜBERGABEVORRICHTUNG IN EINER VERPACKUNGSMASCHINE UND VERFAHREN ZU DEREN STEUERUNG**
TRANSFER DEVICE ON A PACKAGING MACHINE AND METHOD FOR CONTROL THEREOF
DISPOSITIF DE TRANSFERT INSTALLE DANS UNE MACHINE D'EMBALLAGE ET SON PROCEDE DE COMMANDE

(30) Priorität: 19.04.2005 DE 102005017961
(43) Veröffentlichungstag der Anmeldung: 02.01.2008
(73) Patentinhaber: IWK Verpackungstechnik GmbH, 76297 Stutensee-Blankenloch (DE)
(72) Erfinder: SIMM, Thorsten, 76199 Karlsruhe (DE); PÖTZSCH, Stefan, 76287 Rheinstetten (DE)
(74) Vertreter: Lasch, Hartmut
(86) Internationale Anmeldenummer: PCT/EP2006/003087
(87) Internationale Veröffentlichungsnummer: WO 2006/111271

(56) Entgegenhaltungen:
- DE-A1- 2 037 536
- DE-A1- 2 711 132
- US-A- 2 781 121
- US-A- 5 308 223
- US-B1- 6 845 860

## Beschreibung

Die Erfindung betrifft ein Verfahren zur Steuerung einer Übergabevorrichtung in einer Verpackungsmaschine, wobei die Übergabevorrichtung eine bewegte erste Fördervorrichtung, eine bewegte zweite Fördervorrichtung, die zumindest abschnittsweise parallel zur ersten Fördervorrichtung verläuft, und eine Schubvorrichtung umfasst, die eine im wesentlichen senkrecht zur Transportrichtung der Fördervorrichtungen gerichtete Schubbewegung ausführt, wobei ein Produkt mittels der ersten Fördervorrichtung einem Übergabeplatz zugeführt, während einer Stillstandsphase der beiden Fördervorrichtungen mittels der Schubvorrichtung an die zweite Fördervorrichtung übergeben und anschließend mittels der zweiten Fördervorrichtung weitertransportiert wird, wobei die beide Fördervorrichtungen Taktweise bewegt sind und die Schubvorrichtung sich in einer zurückgezogenen Stellung außerhalb der Bewegungsbahn des auf der ersten Fördervorrichtung angeordneten Produktes befindet und in einer Einschubstellung sowohl die erste Fördervorrichtung als auch die zweite Fördervorrichtung zumindest teilweise übergreift.

Darüber hinaus betrifft die Erfindung eine Übergabevorrichtung in einer Verpackungsmaschine, mit einer taktweise bewegten ersten Fördervorrichtung, einer taktweise bewegten zweiten Fördervorrichtung, die zumindest abschnittsweise parallel zur ersten Fördervorrichtung verläuft, und einer Schubvorrichtung, die eine im wesentlichen senkrecht zur Transportrichtung der Fördervorrichtungen gerichtete Schubbewegung ausführt, wobei ein Produkt mittels der ersten Fördervorrichtung einem Übergabeplatz zuführbar ist, während einer Stillstandsphase der beiden Fördervorrichtungen mittels der Schubvorrichtung an die zweite Fördervorrichtung übergebbar und mittels der zweiten Fördervorrichtung weitertransportierbar ist.

In einer Verpackungsmaschine tritt die Notwendigkeit auf, ein Produkt zwischen zwei Fördervorrichtungen umzusetzen bzw. von einer ersten Fördervorrichtung an eine zweite Fördervorrichtung zu übergeben. Bei den Fördervorrichtungen handelt es sich üblicherweise um endlos umlaufende Förderbänder oder Förderketten, die taktweise bewegt werden. Im Folgenden soll beispielhaft davon ausgegangen werden, dass es sich bei der ersten Fördervorrichtung um die sogenannte Produktkette, mit der ein Produkt einem Übergabeplatz zugeführt wird, und bei der zweiten Fördervorrichtung um die sogenannte Faltschachtelkette handelt, mit der eine Verpakkung bzw. eine Faltschachtel dem Übergabeplatz zugeführt wird. Jedoch ist die Erfindung auf die genannten Fördervorrichtungen nicht beschränkt, sondern auch auf andere Übergaben eines Produktes zwischen zwei taktweise angetriebenen Fördervorrichtungen innerhalb einer Verpackungsmaschine anwendbar.

Mittels der Produktkette werden dem Übergabeplatz nacheinander eine Vielzahl von gleichartigen Produkten in einer kontinuierlichen Reihe zugeführt. Entsprechend werden dem Übergabeplatz mittels der Faltschachtelkette nacheinander eine Vielzahl von aufgerichteten gleichartigen Faltschachteln in einer kontinuierlichen Reihe zugeführt. Die getakteten Antriebsbewegungen der Produktkette und der Faltschachtelkette, die zumindest am Übergabeplatz parallel zueinander verlaufen, sind durch Verwendung eines gemeinsamen Antriebs so miteinander synchronisiert, dass das Produkt am Übergabeplatz während einer Stillstandsphase der Antriebsbewegungen mittels einer Schubvorrichtung von der Produktkette in die daneben angeordnete Faltschachtelkette aufgeschoben und dort in die geöffnete Verpackung eingeschoben werden kann. Sobald die Schubvorrichtung wieder ihre zurückgezogenen Ruhestellung erreicht hat und sich außerhalb der Bewegungsbahn der Produktkette und der Faltschachtelkette befindet, werden die beiden Ketten vorwärtsbewegt und um einen Bewegungstakt weitertransportiert.

Eine solche Verpackungsmaschine ist aus DE2711132 bekannt.

Moderne Verpackungsmaschinen arbeiten mit sehr hohen Taktzahlen, so dass für einen Arbeits- bzw. Bewegungstakt nur wenige Millisekunden zur Verfügung stehen. Dies führt dazu, dass es in der Verpackungsmaschine zu relativ großen dynamischen Belastungen kommt, weil die zu bewegenden Massen sehr schnell beschleunigt und wieder bis zum Stillstand abgebremst werden müssen. Insbesondere die das Produkt enthaltende Faltschachtel kann eine relativ große Masse darstellen, die bei hohen Taktzahlen zu Schwingungen und einem unruhigen Betrieb der Verpackungsmaschine führt.

Auch in der der Übergabe des Produkts folgenden Handhabung der das Produkt enthaltenden Verpackung, d.h. stromab der Übergabevorrichtung, können die relativ kurzen Taktzeiten zu Problemen führen, da beim nachfolgenden Verschließen der Verpackung eine sehr dynamische Verschlußbewegung notwendig ist und da auch für das Austragen der das Produkt enthaltenden Verpackung aus der Verpackungsmaschine nur eine sehr kurze Zeit zur Verfügung steht.

Um die genannten dynamischen Probleme zu vermeiden, ist versucht worden, die Taktzahl herabzusetzen und somit die Bewegungsgeschwindigkeit der Produktkette und der Faltschachtelkette zu reduzieren. Dies hat jedoch zur Folge, dass die Leistungsfähigkeit der Verpackungsmaschine stark reduziert wird, was unerwünscht ist.

Der Erfindung liegt die Aufgabe zugrunde, ein Verfahren zur Steuerung einer Übergabevorrichtung in einer Verpackungsmaschine zu schaffen, mit dem die dynamischen Belastungen in der Verpackungsmaschine verringert sind, ohne die Leistungsfähigkeit der Verpackungsmaschine zu reduzieren. Darüber hinaus soll eine Übergabevorrichtung geschaffen werden, mit der sich das Verfahren in einfacher Weise ausführen lässt.

Hinsichtlich des Verfahrens wird die Aufgabe mit den kennzeichnenden Merkmalen des Anspruchs 1 gelöst. Dabei ist vorgesehen, dass der Weitertransport des Produktes mittels der zweiten Fördervorrichtung bereits beginnt, bevor die Schubvorrichtung ihre zurückgezogene Stellung erreicht hat.

Erfindungsgemäß wird von der Grundüberlegung ausgegangen, die Transportbewegungen der ersten Fördervorrichtung und der zweite Fördervorrichtung voneinander zu entkoppeln. Auf diese Weise können die Transportbewegungen der beiden Fördervorrichtungen zu unterschiedlichen Zeitpunkten beginnen und insbesondere die zweite Fördervorrichtung kann der ersten Fördervorrichtung vorlaufen und somit mit einer gegenüber der ersten Fördervorrichtung geringeren Geschwindigkeit betrieben werden, wodurch übermäßige dynamische Belastungen in Folge der mit der zweiten Fördervorrichtung transportierten Massen vermieden werden.

Vorzugsweise ist vorgesehen, dass das Produkt mittels der Schubvorrichtung, bei der es sich beispielsweise um einen Stößel handeln kann, in eine mittels der zweiten Fördervorrichtung zugeführte Verpackung, insbesondere eine Faltschachtel, eingeführt und anschließend mit der Verpackung mittels der zweiten Fördervorrichtung weitertransportiert wird. Beim Einschubvorgang kommt die Schubvorrichtung, die auf der der zweiten Fördervorrichtung abgewandten Seite der ersten Fördervorrichtung angeordnet ist, mit dem auf der ersten Fördervorrichtung liegenden Produkt in Anlage und schiebt dieses quer zur Transportrichtung der Fördervorrichtungen auf die zweite Fördervorrichtung bzw. in die dort angeordnete geöffnete Verpackung. Am Ende der Einschubbewegung in der sogenannten Einschubstellung übergreift die Schubvorrichtung bzw. der Stößel die erste Fördervorrichtung vollständig sowie die zweite Fördervorrichtung teilweise und greift in die Verpackung ein. In dieser Einschubstellung behindert die Schubvorrichtung die Transportbewegung der Fördervorrichtungen, so dass diese noch in ihrer Stillstandsphase verbleiben müssen. Die Schubvorrichtung wird dann wieder zurückgezogen, wobei sie zunächst aus der Verpackung herausgezogen wird und dann den Bereich der zweiten Fördervorrichtung verlässt.

In Weiterbildung der Erfindung ist vorgesehen, dass der Weitertransport der das Produkt enthaltenden Verpackung mittels der zweiten Fördervorrichtung bereits beginnt, sobald sich die Schubvorrichtung außerhalb der Bewegungsbahn der auf der zweiten Fördervorrichtung angeordneten Verpakkung befindet. Alternativ ist es auch möglich, den Weitertransport mittels der zweiten Fördervorrichtung beginnen zu lassen, sobald die Schubvorrichtung die zweite Fördervorrichtung verlassen hat.

Die Transportbewegung der ersten Fördervorrichtung kann erst dann beginnen, wenn die Schubvorrichtung außerhalb der Bewegungsbahn des auf der ersten Fördervorrichtung angeordneten Produktes befindet, d.h. von der ersten Fördervorrichtung zurückgezogen wurde. Die erste Fördervorrichtung wird mit einer höheren Geschwindigkeit bewegt als die zweite Fördervorrichtung, so dass die beiden Fördervorrichtungen gleichzeitig wieder eine Stellung einnehmen, in der ein weiteres Produkt übergeben werden kann.

In bevorzugter Ausgestaltung der Erfindung ist vorgesehen, dass am Übergabeplatz zwischen dem Produkt und der Verpakkung ein Prospekt angeordnet ist, der von dem Produkt beim Einführen in die Verpackung mitgenommen wird, wobei der Prospekt mittels einer taktweise angetriebenen Prospekt-Fördervorrichtung zugeführt wird. Die Prospekt-Fördervorrichtung wird weiterbewegt, sobald sich die Schubvorrichtung außerhalb der Bewegungsbahn der auf der zweiten Fördervorrichtung angeordneten Verpackung bzw. außerhalb der Bewegungsbahn der Prospekt-Förder-vorrichtung befindet. Für die Prospekt-Fördervorrichtung kann ebenfalls ein eigener Antrieb vorgesehen sein, um die Zahl der notwendigen Antriebe jedoch möglichst gering zu halten, kann für die zweite Fördervorrichtung und die Prospekt-Fördervorrichtung ein gemeinsamer Antrieb vorgesehen sein, so dass die zweite Fördervorrichtung und die Prospekt-Fördervorrichtung in ihren Bewegungen miteinander synchronisiert sind.

Hinsichtlich der Übergabevorrichtung wird die oben genannte Aufgabe vorzugsweise dadurch gelöst, dass für die erste Fördervorrichtung und die zweite Fördervorrichtung separate Antriebe insbesondere in Form von Servomotoren vorgesehen sind und dass die erste Fördervorrichtung mit einer höheren Geschwindigkeit bewegt wird als die zweite Fördervorrichtung.

Weitere Einzelheiten und Merkmale der Erfindung sind aus der folgenden Beschreibung eines Ausführungsbeispiels unter Bezugnahme auf die Zeichnung ersichtlich. Es zeigen:
- Fig. 1: eine Aufsicht auf eine Übergabevorrichtung in einer Ausgangsstellung eines Übergabetaktes,
- Fig. 2: die Übergabevorrichtung gemäß Fig. 1 nach dem Ein- schieben des Produktes in die Verpackung,
- Fig. 3: die Übergabevorrichtung gemäß Fig. 2 während des Zu- rückziehens der Schubvorrichtung,
- Fig. 4: die Übergabevorrichtung gemäß Fig. 3 mit zurückgezo- gener Schubvorrichtung,
- Fig. 5: die Übergabevorrichtung gemäß Fig. 4 zu Beginn eines neuen Übergabetaktes und
- Fig. 6: drei Weg-Zeit-Diagramme für die Bewegungsverläufe der ersten Fördervorrichtung, der Schubvorrichtung und der zweiten Fördervorrichtung.

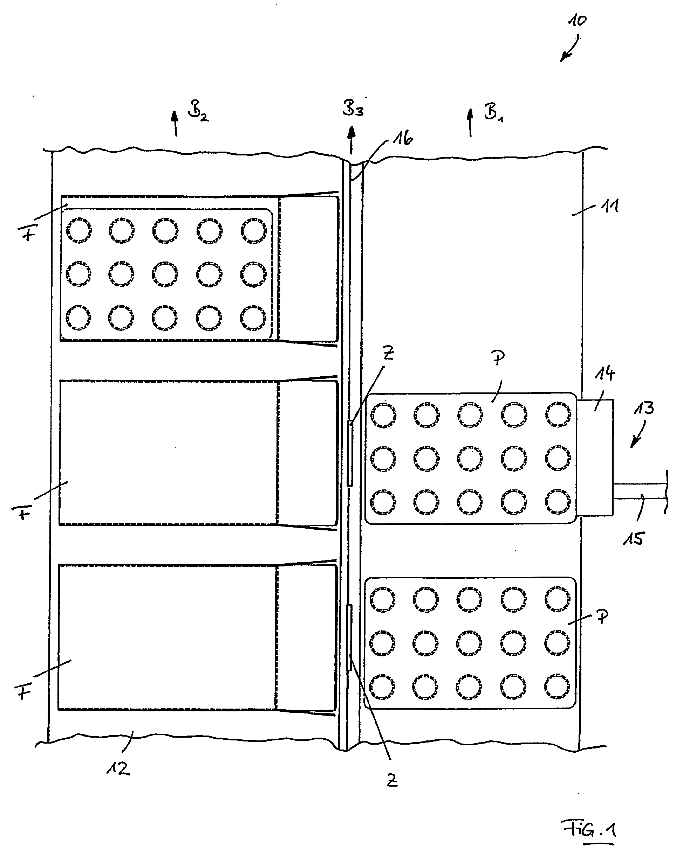

Eine in Figur 1 schematisch dargestellte Übergabevorrichtung 10 umfasst eine erste endlos umlaufende Fördervorrichtung 11 in Form einer sogenannten Produktkette, die taktweise angetrieben ist und auf der der Übergabevorrichtung nacheinander eine Vielzahl von Produkten P in gegenseitigem Abstand in einer Reihe zugeführt werden.

Parallel zu der ersten Fördervorrichtung 11 verläuft eine zweite Fördervorrichtung 12 in Form einer sogenannten Faltschachtelkette, mit der der Übergabevorrichtung nacheinander eine Vielzahl von aufgerichteten Faltschachteln F in gegenseitigem Abstand in einer Reihe zugeführt werden. Wie Figur 1 zeigt, sind die Faltschachteln auf ihrer der ersten Fördervorrichtung 11 zugewandten Seite offen.

Zwischen der ersten Fördervorrichtung 11 und der zweiten Fördervorrichtung 12 verläuft eine Prospekt-Fördervorrichtung 16, mit der der Übergabevorrichtung 10 nacheinander eine Vielzahl von Prospekten Z in gegenseitigem Abstand in einer Reihe zugeführt werden kann. Die erste Fördervorrichtung 11, die zweite Fördervorrichtung 12 und die Prospekt-Fördervorrichtung 16 werden alle taktweise in die gleiche Richtung (gemäß Figur 1 nach oben) bewegt, wie es durch die Pfeile B₁, B₂ und B₃ ist.

Auf der der zweiten Fördervorrichtung 12 bzw. der Prospekt-Fördervorrichtung 16 abgewandten Seite der ersten Fördervorrichtung 11 ist eine Schubvorrichtung 13 angeordnet, die eine Schubstange 15 umfasst, an deren Ende ein Schubstück 14 angebracht ist. Die Schubvorrichtung 13 kann senkrecht zur Transportvorrichtung der Fördervorrichtungen 11, 12 und 16, d.h. gemäß Figur 1 von rechts nach links bewegt und wieder in ihre Ausgangsstellung zurückgezogen werden.

Figur 1 zeigt die Ausgangsstellung eines Übergabetaktes oder -vorgangs. Die Fördervorrichtungen 11, 12, und 13 befinden sich in einer Stillstandsphase, wobei das Produkt P mit der Öffnung der Faltschachtel F ausgerichtet ist und sich der Prospekt Z zwischen dem Produkt P und der Faltschachtel F befindet. Die Schubvorrichtung 13 liegt auf der der Faltschachtel F abgewandten Seite des Produktes P an diesem an.

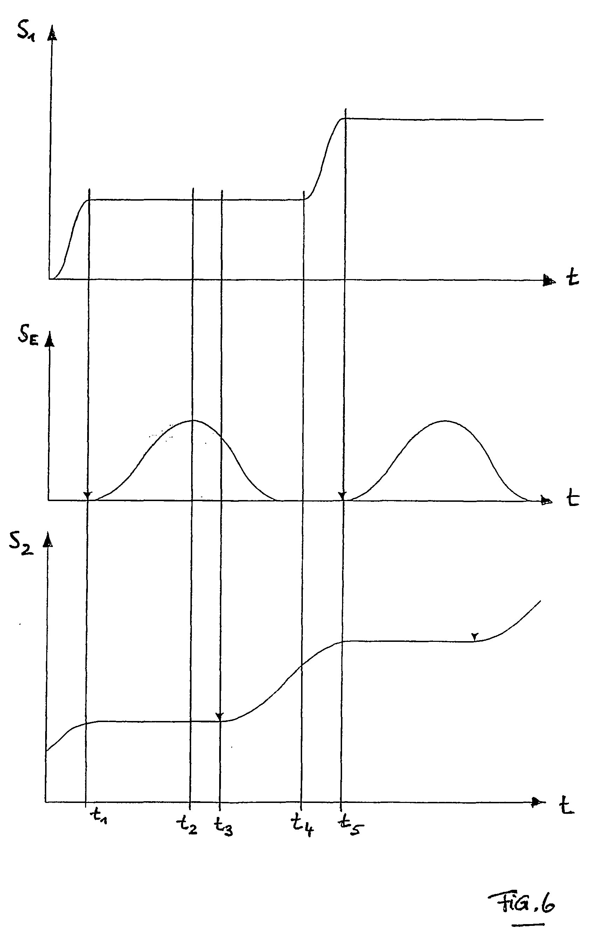

In Figur 6 sind drei Weg-Zeit-Diagramme gezeigt, wobei im oberen Diagramm der Weg S₁ der ersten Fördervorrichtung 11 und im unteren Diagramm S₂ der zweiten Fördervorrichtung 12 dargestellt ist. Im mittleren Diagramm ist der Weg S_{E} der Schubvorrichtung 13 dargestellt. Die in Figur 1 gezeigte Ausgangsstellung entspricht der aus Figur 6 zum Zeitpunkt t₁ ablesbaren Situation, d.h. die erste Fördervorrichtung 11 und die zweite Fördervorrichtung 12 stehen jeweils am Beginn einer Ruhe- oder Stillstandsphase, während sich die Schubvorrichtung 13 in ihrer zurückgezogenen Stellung (S_{E}=0) befindet.

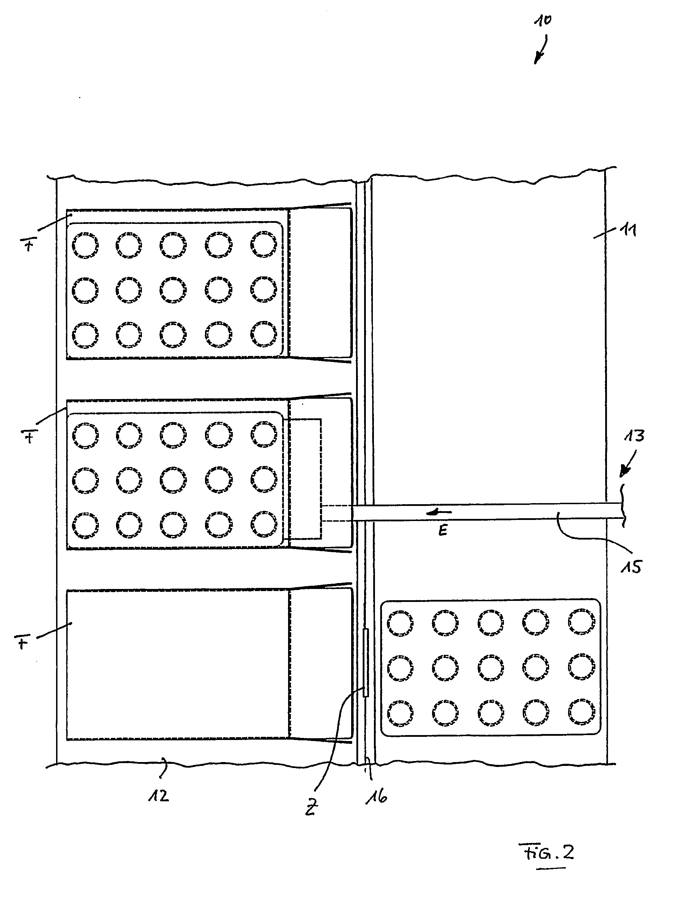

Während die Fördervorrichtungen 11 und 12 und mit ihnen auch die Prospekt-Fördervorrichtung 16 stehen bleiben, wird die Schubvorrichtung 13 aktiviert und schiebt das Produkt P quer zur Längsrichtung der ersten Fördervorrichtung 11 in die Faltschachtel F ein, wobei der Prospekt Z mitgenommen und ebenfalls in die Faltschachtel eingeschoben wird (siehe Pfeil E in Figur 2). Figur 2 zeigt den Zustand zum Zeitpunkt t₂ gemäß Figur 6, in dem das Produkt P in die Faltschachtel F eingeschoben ist und sich die Schubvorrichtung 13 in ihrer Einschubstellung (S_{E} = max) befindet.

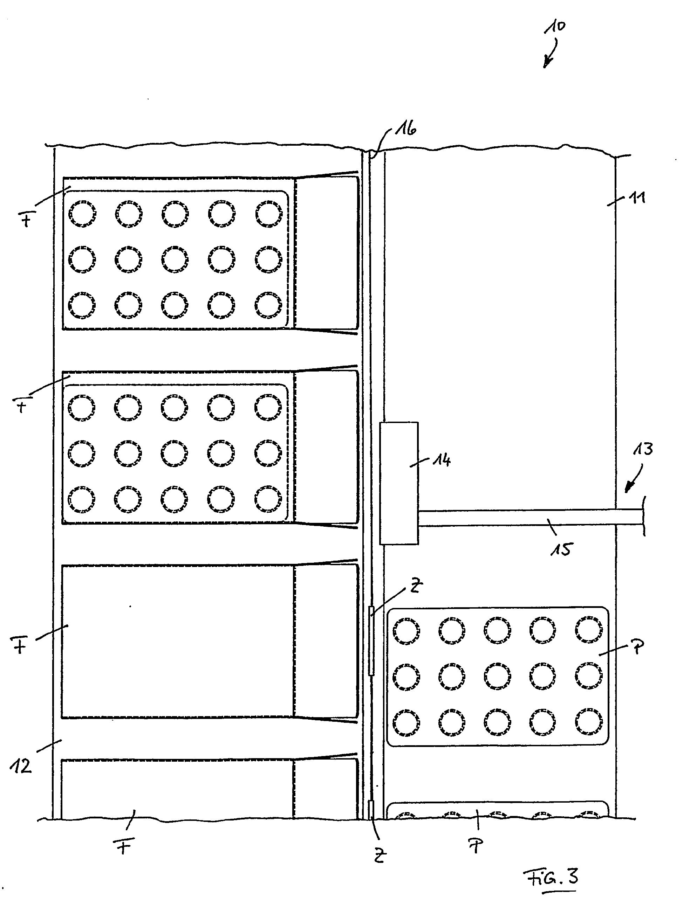

Aus der in Figur 2 dargestellten Einschubstellung wird die Schubvorrichtung 13 wieder in die in Figur 1 dargestellte zurückgezogenen Stellung bewegt. Dabei verlässt das Einschubstück 14 zunächst die Faltschachtel F und dann die zweite Fördervorrichtung 12 und ist zu einem Zeitpunkt t₃ auf der der Faltschachtel F abgewandten Seite der Bewegungsbahn der Prospekt-Fördervorrichtung 16 unmittelbar neben dieser angeordnet, wie es in Figur 3 dargestellt ist. Zu diesem Zeitpunkt t₃ beginnt bereits die Transportbewegung der zweiten Fördervorrichtung 12 mit relativ geringer Geschwindigkeit, wie es aus dem unteren Diagramm der Figur 6 zu entnehmen ist. Die Prospekt-Fördervorrichtung 16 ist vorzugsweise mit der zweiten Fördervorrichtung 12 synchronisiert und weist mit dieser einen gemeinsamen Antrieb auf, so dass auch die Prospekt-Fördervorrichtung 16 weiterbewegt wird.

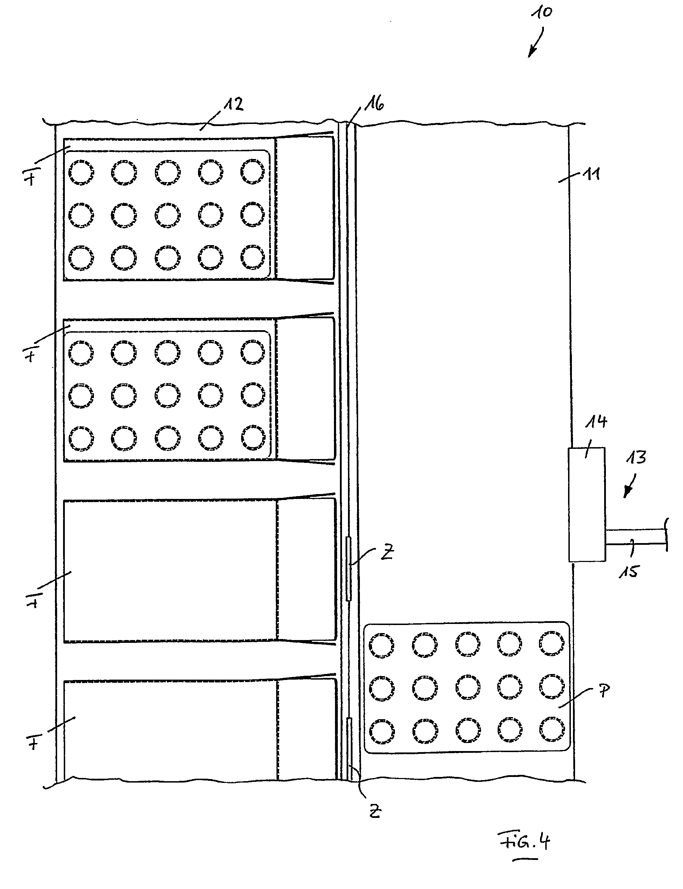

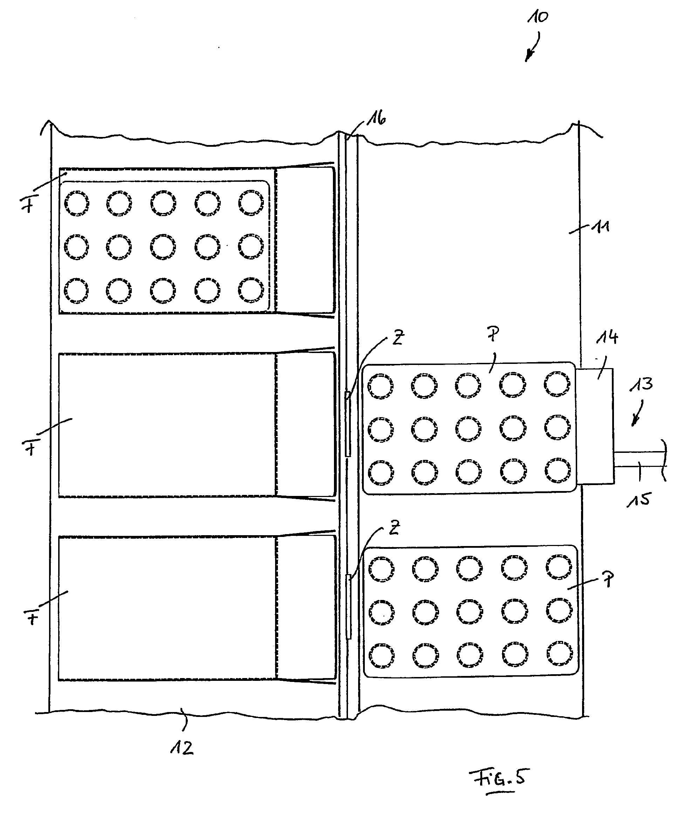

Die erste Fördervorrichtung 11 verbleibt noch so lange in ihrer Stillstandsphase, bis die Schubvorrichtung 13 zum Zeitpunkt t₄ ihre zurückgezogenen Stellung außerhalb der Bewegungsbahn des auf der ersten Fördervorrichtung 11 angeordneten Produkt P erreicht hat. Dieser Zustand ist in Figur 4 dargestellt. Ab dem Zeitpunkt t₄ wird auch die erste Fördervorrichtung 11 weiterbewegt und der zweiten Fördervorrichtung 12 sowie der Prospekt-Fördervorrichtung 16 mit höherer Geschwindigkeit nachgeführt, wie es aus dem oberen Diagramm aus Figur 6 ersichtlich ist. Zum Zeitpunkt t₅ erreichen alle drei Fördervorrichtungen 11, 12 und 16 wieder die Ausgangsstellung für den nächsten Übergabetakt oder -vorgang, die in Figur 5 dargestellt ist und der in Figur 1 dargestellten Stellung entspricht. Daraufhin laufen die oben beschriebenen Vorgänge wiederum ab.

Wie insbesondere aus Figur 6 ersichtlich ist, steht der zweiten Fördervorrichtung 12 zusammen mit der Prospekt-Fördervorrichtung 16 zwischen den Zeitpunkten t₃ und t₅ ein wesentlich längerer Zeitraum für eine Vorschubbewegung eines Arbeitstaktes zur Verfügung als der ersten Fördervorrichtung 11 zwischen den Zeitpunkten t₄ und t₅. Die mit dem Produkt P und dem Prospekt Z befüllte Faltschachtel F, die eine relativ große Masse besitzt, kann auf diese Weise durch die zweite Fördervorrichtung 12 mit einer geringeren Geschwindigkeit als die erste Fördervorrichtung 11 bewegt werden, so dass nachteilige dynamische Beeinträchtigungen des Betriebs der Verpackungsmaschine vermieden sind, ohne die Taktzahl der Verpackungsmaschine reduzieren zu müssen.

## Patentansprüche

1. Verfahren zur Steuerung einer Übergabevorrichtung (10) in einer Verpackungsmaschine, wobei die Übergabevorrichtung eine bewegte erste Fördervorrichtung (11), eine bewegte zweite Fördervorrichtung (12), die zumindest abschnittsweise parallel zu der ersten Fördervorrichtung (11) verläuft, und eine Schubvorrichtung (13) umfasst, die eine im wesentlichen senkrecht zur Transportrichtung der Fördervorrichtungen (11, 12) gerichtete Schubbewegung ausführt, wobei ein Produkt (P) mittels der ersten Fördervorrichtung (11) einem Übergabeplatz zugeführt, während einer Stillstandsphase der beiden Fördervorrichtungen (11, 12) mittels der Schubvorrichtung (13) an die zweite Fördervorrichtung (12) übergeben und anschließend mittels der zweiten Fördervorrichtung (12) weitertransportiert wird, wobei die Schubvorrichtung (13) sich in einer zurückgezogenen Stellung außerhalb der Bewegungsbahn des auf der ersten Fördervorrichtung (11) angeordneten Produkt (P) befindet und in einer Einschubstellung sowohl die erste Fördervorrichtung (11) als auch die zweite Fördervorrichtung (12) zumindest teilweise übergreift, **dadurch gekennzeichnet, dass** die beide Fördervorrichtungen Taktweise bewegt sind und dass der Weitertransport des Produktes (P) mittels der zweiten Fördervorrichtung (12) bereits beginnt, bevor die Schubvorrichtung (13) ihre zurückgezogenen Stellung erreicht hat.

2. Verfahren nach Anspruch 1, **dadurch gekennzeichnet, dass** das Produkt (P) mittels der Schubvorrichtung (13) in eine mittels der zweiten Fördervorrichtung (12) zugeführte Verpackung (F), insbesondere eine Faltschachtel, eingeführt und anschließend mit der Verpackung (F) mittels der zweiten Fördervorrichtung (12) weitertransportiert wird.

3. Verfahren nach Anspruch 2, **dadurch gekennzeichnet, dass** der Weitertransport der das Produkt enthaltenden Verpackung (F) mittels der zweiten Fördervorrichtung (12) bereits beginnt, sobald sich die Schubvorrichtung (13) außerhalb der Bewegungsbahn der auf der zweiten Fördervorrichtung (12) angeordneten Verpackung (F) befindet.

4. Verfahren nach einem der Ansprüche 1 bis 3, **dadurch gekennzeichnet, dass** für die erste Fördervorrichtung (11) und die zweite Fördervorrichtung (12) separate Antriebe vorgesehen sind und dass die erste Fördervorrichtung (11) mit einer höheren Geschwindigkeit bewegt wird als die zweite Fördervorrichtung (12).

5. Verfahren nach einem der Ansprüche 2 bis 4, **dadurch gekennzeichnet, dass** am Übergabeplatz zwischen dem Produkt (P) und der Verpackung (F) ein Prospekt (Z) angeordnet ist, der von dem Produkt (P) beim Einführen in die Verpackung (F) mitgenommen wird, wobei der Prospekt (Z) mittels einer taktweise angetriebenen Prospekt-Fördervorrichtung (16) zugeführt wird, und dass die Prospekt-Fördervorrichtung (16) weiterbewegt wird, sobald sich die Schubvorrichtung außerhalb der Bewegungsbahn der auf der zweiten Fördervorrichtung (12) angeordneten Verpackung (F) befindet.

6. Verfahren nach Anspruch 5, **dadurch gekennzeichnet, dass** die zweite Fördervorrichtung (12) und die Prospekt-Fördervorrichtung (16) in ihren Bewegungen miteinander synchronisiert sind.

7. Verfahren nach Anspruch 5 oder 6, **dadurch gekennzeichnet, dass** für die zweite Fördervorrichtung (12) und die Prospekt-Fördervorrichtung (16) ein gemeinsamer Antrieb vorgesehen ist.

8. Übergabevorrichtung (10) in einer Verpackungsmaschine, mit einer taktweise bewegten ersten Fördervorrichtung (11), einer taktweise bewegten zweiten Fördervorrichtung (12), die zumindest abschnittsweise parallel zur ersten Fördervorrichtung (11) verläuft, und einer Schubvorrichtung (13), die eine im wesentlichen senkrecht zur Transportrichtung der Fördervorrichtungen (11, 12) gerichtete Schubbewegung ausführt, wobei ein Produkt (P) mittels der ersten Fördervorrichtung (11) einem Übergabeplatz zuführbar ist, während einer Stillstandsphase der beiden Fördervorrichtungen (11, 12) mittels der Schubvorrichtung (13) an die zweite Fördervorrichtung (12) übergebbar und mittels der zweiten Fördervorrichtung (12) weitertransportierbar ist, **dadurch gekennzeichnet, dass** für die erste Fördervorrichtung (11) und die zweite Fördervorrichtung (12) separate Antriebe vorgesehen sind und dass die erste Fördervorrichtung (11) eine höhere Transportgeschwindigkeit als die zweite Fördervorrichtung (12) aufweist.

9. Übergabevorrichtung nach Anspruch 8, **dadurch gekennzeichnet, dass** als Antriebe Servomotoren vorgesehen sind.

## Claims

1. Method for controlling a transfer device (10) in a packaging machine, wherein the transfer device comprises a first moved conveying device (11), a second moved conveying device (12) which extends, at least in sections, parallel to the first conveying device (11), and a pushing device (13) which performs a pushing motion substantially perpendicular to the transport direction of the conveying devices (11, 12), wherein a product (P) is supplied by the first conveying device (11) to a transfer location, is transferred by the pushing device (13) to the second conveying device (12) during a standstill phase of both conveying devices (11, 12) and is subsequently further transported by the second conveying device (12), wherein the pushing device (13) is in a withdrawn position outside of the path of motion of the product (P) disposed on the first conveying device (11) and extends over the first conveying device (11) and also at least partially over the second conveying device (12) in an insertion position, **characterized in that** the two conveying devices are each moved in cycles and that further transport of the product (P) by the second conveying device (12) starts before the pushing device (13) has reached its withdrawn position.

2. Method according to claim 1, **characterized in that** the product (P) is inserted by the pushing device (13) into a package (F), in particular a folded box, which is supplied by the second conveying device (12), and is subsequently further transported with the package (F) by the second conveying device (12).

3. Method according to claim 2, **characterized in that** the second conveying device (12) starts further transport of the package (F), containing the product, already when the pushing device (13) is outside of the path of motion of the package (F) disposed on the second conveying device (12).

4. Method according to any one of the claims 1 through 3, **characterized in that** the first conveying device (11) and the second conveying device (12) have separate drives, and the first conveying device (11) is moved at a higher speed than the second conveying device (12).

5. Method according to any one of the claims 2 through 4, **characterized in that**, at the transfer location, a leaflet (Z) is disposed between the product (P) and the package (F), which is carried along by the product (P) during insertion into the package (F), wherein the leaflet (Z) is supplied by a leaflet conveying device (16) which is driven in cycles, and wherein the leaflet conveying device (16) is moved further as soon as the pushing device is outside of the path of motion of the package (F) disposed on the second conveying device (12).

6. Method according to claim 5, **characterized in that** the motions of the second conveying device (12) and the leaflet conveying device (16) are synchronized.

7. Method according to claim 5 or 6, **characterized in that** the second conveying device (12) and the leaflet conveying device (16) have a common drive.

8. Transfer device (10) in a packaging machine, comprising a first conveying device (11) which is moved in cycles, a second conveying device (12) which is moved in cycles and extends at least in sections parallel to the first conveying device (11), and a pushing device (13) which performs a pushing motion substantially perpendicular to the transport direction of the conveying devices (11, 12), wherein a product (P) may be supplied by the first conveying device (11) to a transfer location, transferred by the pushing device (13) to the second conveying device (12) during a standstill phase of both conveying devices (11, 12) and subsequently be further transported by the second conveying device (12), **characterized in that** the first conveying device (11) and second conveying device (12) have separate drives, and the first conveying device (11) has a higher transport speed than the second conveying device (12).

9. Transfer device according to claim 8, **characterized in that** servomotors are provided as drives.

## Revendications

1. Procédé de commande d'un dispositif de transfert (10) dans une machine d'emballage, dans lequel le dispositif de transfert comprend un premier dispositif de transport (11) en mouvement, un deuxième dispositif de transport (12) en mouvement s'étendant, au moins par zones, parallèle au premier dispositif de transport (11), et un dispositif pousseur (13) effectuant un mouvement de poussée orienté sensiblement perpendiculaire à la direction de transport des dispositifs de transport (11, 12), dans lequel on achemine un produit (P) au moyen du premier dispositif de transport (11) vers un point de transfert, on le transfère durant une phase de repos des deux dispositifs de transport (11, 12) vers le deuxième dispositif de transport (12) au moyen du dispositif pousseur (13) et on continue ensuite de l'acheminer au moyen du deuxième dispositif de transport (12), dans lequel le dispositif pousseur (13) se trouve dans une position de retrait en dehors de la trajectoire du produit (P) disposé sur le premier dispositif de transport (11), et, dans une position d'introduction, chevauche au moins partiellement aussi bien le premier dispositif de transport (11) que le deuxième dispositif de transport (12), **caractérisé en ce que** les deux dispositifs de transport sont entraînés en cadence et **en ce que** la poursuite de l'acheminement du produit (P) au moyen du deuxième dispositif de transport (12) commence déjà avant que le dispositif pousseur (13) ait atteint sa position en retrait.

2. Procédé selon la revendication 1, **caractérisé en ce que** l'on introduit le produit (P) au moyen du dispositif pousseur (13) dans un emballage (F) acheminé au moyen du deuxième dispositif de transport (12), plus particulièrement une boîte pliante, et qu'on continue ensuite son acheminement avec la boîte pliante (F) au moyen du deuxième dispositif de transport (12).

3. Procédé selon la revendication 2, **caractérisé en ce que** la poursuite de l'acheminement de l'emballage (F) contenant le produit au moyen du deuxième dispositif de transport (12) commence déjà dès que le dispositif pousseur (13) se trouve en dehors de la trajectoire de l'emballage (F) disposé sur le deuxième dispositif de transport (12).

4. Procédé selon l'une quelconque des revendications 1 à 3, **caractérisé en ce que** l'on prévoit des entraînements séparés pour le premier dispositif de transport (11) et le deuxième dispositif de transport (12), et **en ce que** le premier dispositif de transport (11) est actionné à une vitesse plus élevée que le deuxième dispositif de transport (12).

5. Procédé selon l'une quelconque des revendications 2 à 4, **caractérisé en ce qu'**au point de transfert, entre le produit (P) et l'emballage (F) est disposé un prospectus (Z), entraîné par le produit (P) lors de son introduction dans l'emballage (F), le prospectus (Z) étant acheminé par un dispositif de transport de prospectus (16) entraîné en cadence, et **en ce que** le dispositif de transport de prospectus (16) continue d'être actionné dès que le dispositif pousseur se trouve en-dehors de la trajectoire de l'emballage (F) disposé sur le deuxième dispositif de transport (12).

6. Procédé selon la revendication 5, **caractérisé en ce que** le deuxième dispositif de transport (12) et le dispositif de transport de prospectus (16) sont synchronisés dans leurs mouvements.

7. Procédé selon la revendication 5 ou 6, **caractérisé en ce que** l'on prévoit un entraînement commun au deuxième dispositif de transport (12) et au dispositif de transport de prospectus (16).

8. Dispositif de transfert (10) dans une machine d'emballage, comprenant un premier dispositif de transport (11) entraîné en cadence, un deuxième dispositif de transport (12) entraîné en cadence s'étendant, au moins par zones, parallèle au premier dispositif de transport (11), et un dispositif pousseur (13) effectuant un mouvement de poussée orienté sensiblement perpendiculaire à la direction de transport des dispositifs de transport (11, 12), dans lequel on peut acheminer un produit (P) au moyen du premier dispositif de transport (11) vers un point de transfert, on peut le transférer durant une phase de repos des deux dispositifs de transport (11, 12) vers le deuxième dispositif de transport (12) au moyen du dispositif pousseur (13) et on peut continuer ensuite son acheminement au moyen du deuxième dispositif de transport (12), **caractérisé en ce que** l'on prévoit des entraînements séparés pour le premier dispositif de transport (11) et le deuxième dispositif de transport (12), et **en ce que** le premier dispositif de transport (11) présente une vitesse de transport plus élevée que le deuxième dispositif de transport (12).

9. Dispositif de transfert selon la revendication 8, **caractérisé en ce que** l'on utilise des servomoteurs comme moyens d'entraînement.
